# EUROPÄISCHE PATENTANMELDUNG

(11) **EP 1 258 557 A2**
(43) Veröffentlichungstag der Anmeldung: **20.11.2002**
(21) Anmeldenummer: 02010663.9
(22) Anmeldetag: 13.05.2002
(51) Int. Cl.: D06H 5/00, B29C 65/08

(54) **Verfahren zum Verbinden von Stücken aus textilem Gewebe**

(30) Priorität: 14.05.2001 DE 10123309
(71) Anmelder: IMTEX S.L., SANTA COLOMA, PRINCIPAT D'ANDORRA (AD)
(72) Erfinder: Solinski, Knut-Georg, Santa Coloma (AD)
(74) Vertreter: Patentanwälte Wenzel & Kalkoff

(57) **Zusammenfassung**

Die Erfindung betrifft ein Verfahren zum Verbinden von Stücken (10,12) aus textilem Gewebe, ein Verfahren zur Herstellung von endlosen Textilien und ein Textilerzeugnis.

Um ein textiles Band bzw. endloses Textilerzeugnis zu schaffen, das für endlose Verarbeitung geeignet ist, wird vorgeschlagen daß zum Verbinden von Stücken (10,12) aus textilem Gewebe an den Textilstücken zunächst jeweils eine Schnittkante gebildet wird, bei der die Fäden an der Kante im wesentlichen gebunden sind, die Textilstücke überlappend dann aufeinandergelegt werden und die aufeinandergelegten Textilstücke zwischen Sonotrode und einem Amboß (14) aufeinandergedrückt und durch Ultraschall miteinander verschweißt werden. Amboß (14) und/oder Sonotrode (16) weisen ein Oberflächenprofil (22) mit einer Anzahl von Erhebungen auf. Als Verfahren wird vorgeschlagen, daß Textilprodukte endlos hergestellt werden, und beim Auftreten von Webfehlern die Fehlerstellen herausgeschnitten werden, und die Schnittstellen verbunden werden, so daß das gebildete endlose Textilprodukt zur Weiterverarbeitung auf einen geeigneten Träger aufgebracht oder in einen geeigneten Behälter eingefüllt werden kann.

## Beschreibung

Die Erfindung betrifft ein Verfahren zum Verbinden von Stücken aus textilem Gewebe, ein Verfahren zur Herstellung von Textilprodukten und ein Textilprodukt.

Textile Stoffe werden in großer Menge bei der Herstellung einer Vielzahl von Produkten verwendet. Als Beispiel sei hier die Herstellung einer Matratze genannt, bei der maschinell ein Band zugeführt und rings um die Matratze herum mit dieser vernäht wird.

Für die maschinelle Verarbeitung derartiger Textilien werden endlos hergestellte Textilien, bspw. Bänder benötigt. Diese sind bspw. auf geeigneten Trägern, bspw. Rollen, aufgebracht oder lose in Behältnisse eingefüllt. Bei endloser Herstellung der Textilien durch bekannte Herstellungsverfahren, bspw. Weben, Flechten, Rascheln, Stricken kann jedoch die Bildung von Fehlerstellen nicht vollständig ausgeschlossen werden. Derartige Fehlerstellen können zwar bei einer anschließenden Kontrolle aufgefunden werden. Wenn die Fehlerstellen aber nicht mitverarbeitet werden können, muß das Textilerzeugnis an diesen Stellen zerschnitten werden.

Dies wiederum bereitet große Schwierigkeiten bei der kontinuierlichen Verarbeitung eines solchen endlosen Textilerzeugnisses. Wenn in einer zugelieferten Einheit mehrere Abschnitte unregelmäßiger Länge enthalten sind, müssen die jeweiligen Längen bei der Verarbeitung berücksichtigt werden. Bspw. für die Verarbeitung an einer Matratze muß ein Band in einem Stück zugeführt werden, so daß stets überwacht werden muß, ob noch ausreichende Bandlänge vorhanden ist. Dies führt zu einem sehr hohen Aufwand.

Ein bekanntes Verbindungsverfahren für Textilien, die einen gewissen Anteil an SynthetikFasern aufweisen, ist das Verschweißen mit Hilfe von Ultraschall. Die EP-A-001581 beschreibt ein solches Verfahren zum Verbinden von Textilien, die mindestens 50 % Anteil thermoplastischer Fasern oder Fäden haben. Zwei Textilstücke werden zwischen einer Sonotrode und einem Amboss zusammengepreßt und Schwingungen im Ultraschall-Bereich erzeugt. Von kleinen Spitzen werden eine Anzahl von Schweißstellen hergestellt, die in zwei Reihen angeordnet sind. In dem Dokument wird die Zwischenlage von Papier empfohlen, um den Druck besser zu verteilen und eine bessere Festigkeit zu erzielen.

Die DE-A-42 33 878 zeigt eine Vorrichtung zum Verschweißen und Trennen von Einfaßbändern bei der Herstellung von Decken. Die oben und unten verlaufenden Teile eines längs an einer Decke angenähten Bandes werden mit Hilfe von zwei im Abstand voneinander angeordneten Nähten zwischen einem Ober- und einem Unterwerkzeug mit Ultraschall verschweißt. Zwischen den so gebildeten Nähten wird das Band getrennt. Für das Verschweißen werden ebene Flächen verwendet.

In der CH-A-615965 wird eine Ultraschall-Nähmaschine zum Schweißen von Textilmaterial vorgestellt. Ein mit einem Schweißmuster oder einer Schneidkante versehener Stempel drückt das Schweißgut gegen eine mit Ultraschall in Vibration versetzbare Sonotrode.

DE-A-195 32 499 zeigt eine Vorrichtung zum UltraschallSchneiden, bei der ein UltraschallKopf mit einer Sonotrode und einer Arbeitsklinge gegen einen runden Gegenhalter gedrückt mit Ultraschall-Frequenz vibriert und so textile Breitgewebe-Bahnen zerschneidet. Es ist angegeben, daß die Vorrichtung auch zum Ultraschall-Schweißen eingesetzt werden kann.

Es ist Aufgabe der Erfindung, ein textiles Band bzw. endloses Textilerzeugnis und ein Verfahren zu dessen Herstellung anzugeben, wobei auf einfache und kostengünstige Weise ein für endlose Verarbeitung geeignetes Textilerzeugnis geschaffen wird.

Diese Aufgabe wird gelöst durch ein Verbindungsverfahren nach Anspruch 1, ein Herstellungsverfahren nach Anspruch 11 und Textilprodukt nach Anspruch 13. Abhängige Ansprüche beziehen sich auf vorteilhafte Ausführungsformen der Erfindung.

Bisher war es nicht möglich, die zur Entfernung von Fehlerstellen auseinandergeschnittenen endlosen Textilerzeugnisse, insbesondere Bänder, wieder so zu verbinden, daß sie wie fehlerfreie Textilerzeugnisse verarbeitet werden konnten. Denn die entsprechenden Verbindungen müssen so beschaffen sein, daß bspw. ein Band weiterhin maschinell verarbeitet, d.h. durch entsprechende Zuführungen geführt werden kann. Hierfür müssen die Verbindungen einerseits die notwendige Festigkeit, andererseits aber auch eine gewisse Elastizität aufweisen. Außerdem muß auch die Verarbeitbarkeit des Bandes, d.h. insbesondere das weitere Vernähen auch an einer Verbindungsstelle möglich sein.

Beim erfindungsgemäßen Verbindungsverfahren werden zwei Textilstücke zwischen einer Sonotrode und einem Amboss überlappend aufeinandergelegt und durch Ultraschall miteinander verschweißt. Hierfür wird die Sonotrode mit Hilfe geeigneter, dem Fachmann bekannter Vorrichtungen in Schwingungen versetzt, deren Frequenz im Ultraschall-Bereich liegt. Die zwischen der Sonotrode und dem Amboss als festem Gegenstück eingeklemmten Textilstücke werden hierdurch in schnelle Bewegungen versetzt, so daß die thermoplastischen Fasern aufschmelzen bzw. plastifizieren und sich miteinander verbinden. Hierdurch entsteht eine über die gesamte Fläche gleichmäßige Verbindung der Textilstücke.

Der Erfindung liegt dabei die Erkenntnis zugrunde, daß bisherige Verfahren zum Ultraschall-Verschweißen von Textilstücken entweder keine ausreichende Festigkeit boten oder nicht ausreichende Verarbeitungseigenschaften aufwiesen. Diesem Problem wird erfindungsgemäß dadurch begegnet, daß die Textilstücke an den Rändern der miteinander zu verbindenden Bereiche "heiß abgeschnitten" sind, d.h. daß eine solche Schnittkante gebildet ist, bei der die Fäden der textilen Gewebe an der Kante im wesentlichen gebunden werden. Es ist dem Fachmann bekannt, daß ein solcher Effekt bspw. durch UltraschallSchneiden eintritt, aber auch durch andere Maßnahmen erzielt werden kann. Entscheidend ist, daß zumindest große Anteile der Fäden an der Kante gebunden sind, bspw. durch Plastifizierung.

Angestrebt wird hierbei die Bildung einer solchen Schweißnaht, bei der eine Plastifizierung der im Gewebe enthaltenen synthetischen Fasern nur punktweise, möglichst gut über den Schweißbereich verteilt, erfolgt. Es hat sich gezeigt, daß bei starkem Druck und langem Schweißvorgang große Bereiche plastifizieren, was hinsichtlich der Verarbeitungseigenschaften unerwünscht sein kann. Insbesondere werden diese Verbindungen auch brüchig, d.h. der textile Charakter geht verloren.

Erfindungsgemäß sind die Oberflächen von Amboss und/oder Sonotrode nicht glatt, sondern weisen ein Oberflächenprofil auf. Hierunter wird ein Muster aus Erhebungen und Vertiefungen verstanden. Mit einem solchen Profil wird der Druck geeignet verteilt und der Materialfluß beeinflußt. Wie bereits erwähnt, ist das Ziel die Beibehaltung des textilen Charakters auch an der Schweißstelle. Dies wird durch eine über diesen Bereich verteilte Anzahl von Stellen erreicht, an denen eine Plastifizierung eintritt und sich einzelne Fäden verbinden. Bevorzugt wird, daß diese Stellen nicht ineinander übergehen, sondern daß sich zwischen den Plastifizierungs-Stellen jeweils noch Abschnitte befinden, in denen das Gewebe noch textil, d.h. nicht plastifiziert ist. Die Plastifizierungs-Stellen sollten möglichst innen liegen, wo die zu verbindenden Stücke aufeinanderliegen.

Als Oberflächenprofil besonders bevorzugt wird ein Kreuzriffel-Profil, bei dem in Zeilen und Spalten angeordnete pyramidenförmige Erhebungen dicht nebeneinander auf der Oberfläche des Ambosses aufgebracht sind. Die Spitzen geben hierbei die Stellen vor, an denen es zuerst zu einer Plastifizierung kommt.

In einer bevorzugten Ausgestaltung weisen die beiden Werkzeuge, zwischen denen die Textilstücke bei der Verarbeitung zusammengepreßt werden, d.h. Amboss und Sonotrode, Oberflächenprofile auf. Hierbei wird bevorzugt, daß ineinander passende Oberflächenprofile verwendet werden, d.h. daß Erhebungen des einen Werkzeugs Vertiefungen des anderen Werkzeugs gegenüberliegen. Hierbei reicht - wegen des ohnehin verbleibenden Abstands - bereits ein grobes Ineinandergreifen aus; die Profile müssen nicht vollständig spaltlos ineinandergreifen.

Sowohl das Oberflächenprofil als auch die weiteren Verfahrensparameter (Ultraschall-Frequenz, Amplitude, Druck, Dauer etc.) sollten entsprechend der jeweils zu bearbeitenden Gewebearten ausgewählt werden. Für sehr feine Gewebe ist bspw. eine deutlich kürzere Schweißdauer bei deutlich geringerer Schweißenergie erforderlich als bei sehr groben Geweben. Das Oberflächenprofil sollte hierbei bevorzugt entsprechend der Struktur des verarbeiteten textilen Gewebes ausgewählt werden. Für grobe Gewebe kann dem nach bspw. eine entsprechend grobe Riffelung gewählt werden, während feine Gewebe auch eine feinere Struktur des Oberflächenprofils erfordern.

Die Verbindung der Textilstücke soll so erfolgen, daß der textile Charakter erhalten bleibt. Dies ist der Fall, wenn keine flächige Plastifizierung auftritt, sondern lediglich eine punktweise Verschmelzung von Fäden der beiden Textilstücke.

Die so gebildeten Schnittkanten können beliebige Formen aufweisen. Einfach sind quer zur Zuführungsrichtung verlaufende, gerade Kanten. Für die automatische Verarbeitung und das Einfädeln in Zuführungen kann auch eine Verbindung vorteilhaft sein, bei der die Schweißnaht schräg verläuft. Dann werden bevorzugt auch entsprechend schräg verlaufende Schnittkanten gebildet. Grundsätzlich kommen alle Verläufe der Schweißnaht und der Schnittkanten in Frage, darunter auch Kurvenverläufe und Schlangenformen.

Durch das Übereinanderlegen und Verbinden zweier Textilstücke, bei denen die Schnittkanten zuvor in dieser Weise gebildet wurden, kann selbst auf geringen Überlappungsbereichen eine erstaunlich hohe Festigkeit erzielt werden. Vor allem ist es hierbei möglich, die Bänder dauerhaft zu verbinden, ohne zu lange Schweißenergie zuzuführen. So wird ein übermäßiges Aufschmelzen der Bänder vermieden, so daß selbst an der Verbindungsstelle der textile Charakter der Bänder erhalten bleibt und diese weiterhin gut verarbeitbar bleiben, d.h. zum Nähen durchstochen werden können und sich auch durch maschinelle Zuführungen hindurchfädeln lassen.

Beim Aneinanderfügen von Stücken von Bändern wird bevorzugt, daß diese mit voneinander wegzeigenden Schneidkanten aufeinandergelegt und im Überlappungsbereich verschweißt werden. So kann eine besonders dünne Nahtstelle gebildet werden. Die Breite des Überlappungsbereichs kann je nach Anwendung und je nach verwendetem Band sehr unterschiedlich gewählt werden. Bevorzugt werden Überlappungsbereiche von 0,2 bis 2 cm. Besonders bevorzugt wird ein ca. 0,7 cm breiter Streifen als Überlappungsbereich. Hierbei wird zudem bevorzugt, daß ein möglichst großer Teil des Überlappungsbereichs auch Teil der Schweißverbindung ist. Dies sollten mindestens 50 % des Überlappungsbereichs sein, bevorzugt mindestens 80 %, besonders bevorzugt sogar der gesamte Überlappungsbereich. Beim Verschweißen zweier gleich breiter Bänder wird bevorzugt, daß die Verschweißung über die gesamte Breite der Bänder durchgeführt wird.

Das Verfahren zur Herstellung von Textilerzeugnissen gemäß Anspruch 10 sieht vor, daß die Textilerzeugnisse, z.B. Bänder zunächst endlos hergestellt werden und auftretende Webfehler herausgeschnitten werden. Die Schnittstellen werden mit einem Ultraschall-Schweißverfahren, bevorzugt wie oben bereits erläutert, miteinander verbunden. So können endlos zu verarbeitende Bänder oder andere Textilerzeugnisse, bspw. Breitgewebe hergestellt und auf einen geeigneten Träger - bspw. eine Rolle - aufgebracht oder zur Weiterverarbeitung in einen Behälter eingefüllt werden. Dadurch, daß die Verfahrensparameter je nach Material so ausgewählt werden, daß z.B. ein Band weiterhin automatisch verarbeitbar ist, können solche Träger in Zuführungsvorrichtungen für das automatische Vernähen des Bandes eingesetzt und kontinuierlich zugeführt und verarbeitet werden.

Nachfolgend werden Ausführungsformen der Erfindung anhand von Zeichnungen näher beschrieben. In den Zeichnungen zeigen:
- Fig. 1: eine schematische Darstellung einer ersten Ausführungsform einer Verbindungsvorrichtung mit zwei Textilstücken;
- Fig. 2: eine Draufsicht auf den Amboss mit Oberflächenprofil;
- Fig. 3: eine Draufsicht auf eine erste Ausführungsform von zwei miteinander verbundenen textilen Bändern;
- Fig. 4: eine schematische Darstellung einer zweiten Ausführungsform einer Verbindungs-vorrichtung mit zwei Textilstücken;
- Fig. 5: eine Draufsicht auf eine zweite Ausführungsform von zwei miteinander verbundenen textilen Bändern.

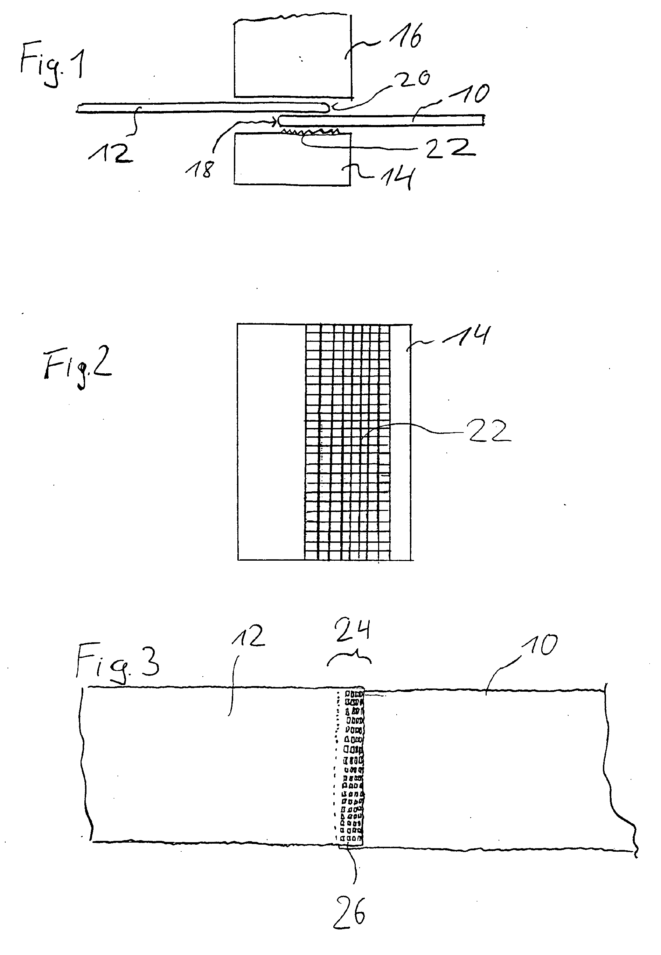

In Fig. 1 ist eine erste Ausführungsform einer Vorrichtung zum Verbinden von zwei textilen Bändern 10, 12 in einer schematischen Seitenansicht gezeigt. Hierbei sind die gezeigten Elemente nicht maßstabsgetreu gezeichnet, sondern nur schematisch angedeutet.

Von der Vorrichtung ist lediglich ein Amboss 14 und eine Sonotrode 16 dargestellt. Die Sonotrode 16 ist Teil einer Vorrichtung zum Ultraschall-Schweißen, die aus einem Ultraschall-Generator und einem von diesem gespeisten Schallkopf besteht. Mit dieser Vorrichtung kann die Sonotrode in Schwingungen versetzt werden, wobei Frequenz und Amplitude der Schwingungen einstellbar sind.

Die Bänder 10, 12 sind textile Bänder aus synthetischen Fasern. Es handelt sich in diesem Beispiel um 4 cm breite Bänder, ebenso können jedoch auch sehr dünne, bspw. 4 mm breite Bänder oder andere Formate von Textilien verarbeitet werden. Mit dem Begriff "Bänder" werden hier Textilien bezeichnet, bei denen die Länge wesentlich größer ist als die Breite. Die Verbindungstechnik kann für sehr unterschiedliche Materialien, Gewebe und Zwecke eingesetzt werden. Elastische Bänder (z.B. mit Gummi-Anteil) können verarbeitet, insbesondere zu Ringen verschweißt werden. Die Verbindung von Breitgewebe-Textilien ist möglich, es sind hier aber zur gleichmäßigen Verteilung des Anpreßdrucks und zur Ausrichtung der Kanten besondere Vorkehrungen zu treffen.

Der Begriff "Gewebe" steht hier für Textilien, die mit einer der vielfältigen bekannten Herstellungsverfahren, bspw. Weben, Rascheln, Stricken, Flechten etc. hergestellt werden.

Die Bänder 10, 12 sind im darstellten Beispiel an Schneidkanten 18, 20 in Querrichtung gerade abgetrennt. Hierbei sind die Schneidkanten in dem Fachmann bekannter Weise so gebildet, daß die Fäden des Gewebes an der Kante im wesentlichen gebunden sind.

Wie in Fig. 1 dargestellt, werden die Bänder 10, 12 überlappend übereinander gelegt, wobei die Schneidkanten voneinander weg zeigen. Der Überlappungsbereich beträgt in diesem Beispiel in Längsrichtung der Bänder ca. 6 mm, in Querrichtung erstreckt sich die Überlappung über die gesamte Breite.

Der Amboss 14 weist ein Oberflächenprofil 22 auf. Es handelt sich um ein Kreuzriffel-Profil, bei dem jeweils Pyramiden gebildet sind, deren Spitzen 0,5 mm über der Grundfläche liegen und deren Spitzen in Zeilen und Spalten nebeneinander im Abstand von 2,5 mm angeordnet sind. Dieses Profil hat sich als guter Kompromiß zur Verarbeitung einer Vielzahl von Bändern unterschiedlicher Gewebestruktur erwiesen.

Figur 3 zeigt eine Draufsicht auf einen Teil der Bänder 10, 12, die mit einer Schweißverbindung 24 verbunden sind. Die Bänder, 10, 12 sind im Bereich der Schweißstelle 24 miteinander verbunden, wobei einzelne der enthaltenen Synthetikfasern jeweils plastifiziert sind und sich mit Fäden des anderen Bandes verbunden haben. Auf der in Figur 3 dargestellten Vorderseite der Verbindung 24 wurden durch die Pyramiden des Kreuzriffel-Profils 22 eine Anzahl von Einkerbungen 26 erzeugt. Die Rückseite der Verbindung 24 ist - entsprechend der glatten Fläche der Sonotrode 16 - ebenfalls glatt.

In einer zweiten in Fig. 4 dargestellten zweiten Ausführungsform einer Verbindungsvorrichtung weist auch die Schweißfläche der Sonotrode 16 ein Oberflächenprofil auf. Dieses Profil entspricht im wesentlichen dem Negativ-Profil des Oberflächenprofils 22. Die hierdurch gebildete Schweißverbindung 24 ist auf keiner ihrer Seiten glatt, sondern weist beidseits Vertiefungen 26 bzw. entsprechende Erhöhungen zwischen den Vertiefungen auf.

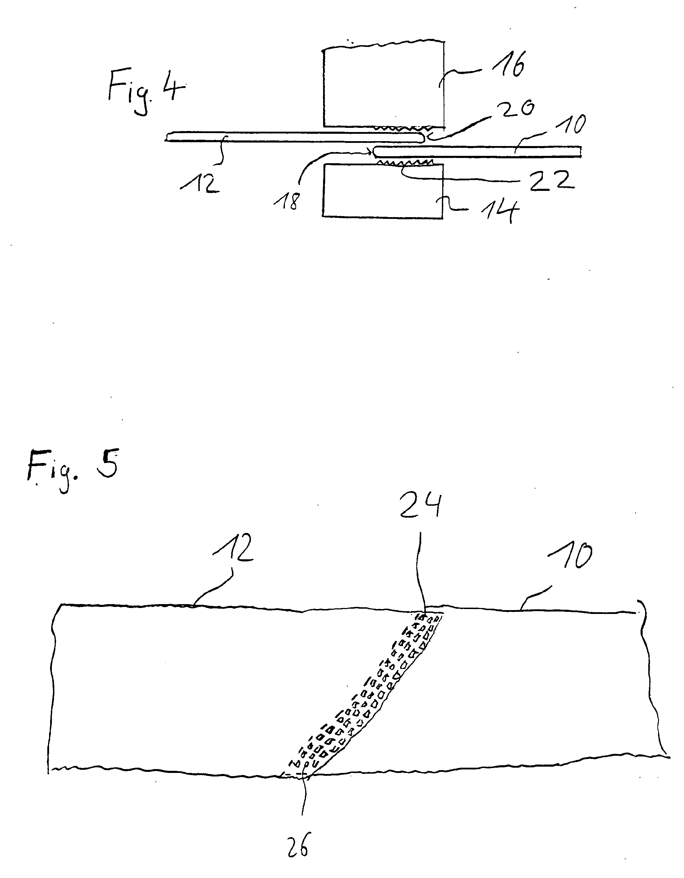

In Fig. 5 ist eine zweite Ausführungsform einer Verbindung gezeigt. Hier sind ebenfalls zwei Bänder 10, 12 wie zuvor beschrieben durch eine Schnittstelle 24 verbunden. Allerdings verläuft die Schweißstelle 24 hierbei schräg zur Längsrichtung des Bandes.

Mit dem Verbindungsverfahren können insbesondere Rollen aus endlosen textilen Bändern zur automatischen Verarbeitung gefertigt werden. Hierfür wird in üblicher Weise ein endloses Band hergestellt. Entsprechend einer ersten Möglichkeit wird das Band direkt bei der Herstellung auf Webfehler überprüft und diese beim Auftreten von Fehlerstellen herausgeschnitten. Die so entstehenden Enden werden wie oben beschrieben verbunden. So entsteht ein endloses Band von bspw. 300 m oder 500 m Länge auf einer Rolle, das für die automatische Verarbeitung geeignet ist.

Entsprechend einer zweiten Möglichkeit wird das Band ohne Unterbrechung des Webeprozesses durchgehend gewoben, wobei Fehlerstellen lediglich markiert werden. Das fertige Band wird mit den entsprechenden Markierungen zunächst auf einer Rolle aufgerollt. In einem anschließenden Umspulprozeß wird das Band von dieser Rolle abgerollt und auf eine weitere Rolle aufgerollt. Hierbei werden die Fehlerstellen herausgeschnitten und die entstehenden Enden wie oben beschrieben verbunden.

Die Parameter für den Schweißvorgang, insbesondere Anpreßdruck, Amplitude, Frequenz und Dauer können für jede Verbindung, d.h. für unterschiedliche Gewebearten durch einfache Versuche ermittelt werden. Hierbei ist das Ziel, die oben beschriebenen Verbindungen mit textilem Charakter zu erhalten. Bspw. für ein 3 cm breites Band hat sich eine Schweißdauer von 0,1 s bei etwa 2 KG/cm² Anpreßdruck bei einer Frequenz von 20 kHz als günstig erwiesen.

Insgesamt läßt sich die Erfindung zusammenfassen als ein Verfahren zum Verbinden von textilen Bändern oder anderem textilen Gewebe. Hierbei werden Bänder endlos hergestellt und die Enden mit einem Ultraschallschweißverfahren verbunden. Besonders gute Verarbeitungseigenschaften ergeben sich, wenn die Schnittkanten so gebildet sind, daß die Fäden der Bänder im wesentlichen gebunden sind. Eine weitere Verbesserung der Eigenschaften wird durch ein zumindest einseitiges Oberflächenprofil auf entweder Amboß oder Sonotrode erzielt.

## Patentansprüche

1. Verfahren zum Verbinden von Stücken aus textilem Gewebe,
- wobei an den Textilstücken (10, 12) zunächst jeweils eine Schnittkante (18, 20) gebildet wird, bei der die Fäden an der Kante (18, 20) im wesentlichen gebunden sind,
- und die Textilstücke (10, 12) überlappend aufeinandergelegt werden,
- und die aufeinandergelegten Textilstücke (10, 12) zwischen einer Sonotrode (16) und einem Amboß (14) aufeinandergedrückt und durch Ultraschall miteinander verschweißt werden,
- wobei die Sonotrode (16) und/oder der Amboß (14) mit einem Oberflächenprofil (22) versehen sind, das eine Anzahl von Erhebungen aufweist.

2. Verfahren nach Anspruch 1, bei dem
- eine Verschweißung erzielt wird, bei der an einer Anzahl von Stellen (26) im Überlappungsbereich (24) eine Plastifizierung des Gewebes stattfindet,
- wobei zwischen den Stellen das Gewebe nicht plastifiziert ist.

3. Verfahren nach Anspruch 1 oder 2, bei dem
- Sonotrode (16) und Amboß (14) jeweils mit einem Oberflächenprofil (22) versehen sind,
- wobei die Oberflächenprofile (22) ineinander eingreifend gestaltet sind.

4. Verfahren nach einem der vorangehenden Ansprüche, bei dem das Oberflächenprofil (22) entsprechend der Textilstruktur mindestens eines der Textilstücke (10, 12) ausgewählt wird.

5. Verfahren nach einem der vorangehenden Ansprüche, **dadurch gekennzeichnet, daß**
- das Oberflächenprofil ein Kreuzriffel-Profil mit pyramidenförmigen Erhebungen ist.

6. Verfahren nach einem der vorangehenden Ansprüche, bei dem eine Ultraschall-Frequenz von etwa 20 kH verwendet wird.

7. Verfahren nach einem der vorangehenden Ansprüche, bei dem die Textilstücke (10, 12) auf einem 0,5 bis 2 cm bevorzugt etwa 1 cm breiten Streifen überlappend aufeinandergelegt werden.

8. Verfahren nach einem der vorangehenden Ansprüche, bei dem die Textilstücke (10, 12) mit voneinanderwegweisenden Kanten (18, 20) aufeinandergelegt werden.

9. Verfahren nach einem der vorangehenden Ansprüche, bei dem die Textilstücke auf mindestens 80 %, bevorzugt über die im wesentlichen gesamte Länge des Überlappungsbereichs verschweißt werden.

10. Verfahren nach einem der vorangehenden Ansprüche, bei dem die Schweißstelle (24) im wesentlichen die gesamte Breite mindestens eines der Textilstücke (10, 12) umfaßt.

11. Verfahren zur Herstellung eines Textilprodukts,
- wobei das Textilprodukt endlos hergestellt wird,
- und beim Auftreten von Webfehlern die Fehlerstellen herausgeschnitten werden, wobei an den Enden (10,12) Schnittkanten (18,20) gebildet werden, an denen die Fäden im Wesentlichen gebunden sind,
- und die Abschnitte verbunden werden,
- indem die Enden (10,12) überlappend aufeinandergelegt, zwischen einer Sonotrode (16) und einem Amboß (14) aufeinandergedrückt und durch Ultraschall miteinander verschweißt werden, wobei die Sonotrode (16) und/oder der Amboo (14) ein Oberflächenprofil (22) mit einer Anzahl von Erhebungen aufweist,
- und das so gebildete endlose Textilprodukt zur Weiterverarbeitung auf einem geeigneten Träger aufgebracht oder in einen geeigneten Behälter eingefüllt wird.

12. Verfahren nach Anspruch 11, bei dem das Textilprodukt ein textiles Band ist.

13. Textilprodukt,
- das aus textilem Gewebe endlos hergestellt ist,
- wobei an einer oder mehreren Stellen des Produktes Verbindungsstellen (24) sind, an denen zwei getrennte Abschnitte (10, 12) des Produktes miteinander verbunden sind,
- wobei die Abschnitte (10, 12) an den Verbindungsstellen (24) überlappend aufeinanderliegen und durch Schweißstellen (24) miteinander verbunden sind,
- wobei die Schweißstellen (24) im Überlappungsbereich verteilt sind,
- und zwischen den Schweißstellen (24) das Gewebe nicht plastifiziert ist.

14. Textilprodukt nach Anspruch 13, das auf einen Träger aufgebracht, bevorzugt aufgerollt ist.

15. Textilprodukt nach Anspruch 13 oder 14, bei dem es sich um ein textiles Band handelt.
